# EUROPÄISCHE PATENTSCHRIFT

(11) **EP 2 040 447 B1**
(45) Veröffentlichungstag und Bekanntmachung des Hinweises auf die Patenterteilung: **16.12.2009**
(21) Anmeldenummer: 07018709.1
(22) Anmeldetag: 24.09.2007
(51) Int. Cl.: H04M 7/00

(54) **Verfahren zum Herstellen einer Kommunikationsverbindung und Telekommunikationsanlage zur Durchführung des Verfahrens**
Method for establishing a communication connection and telecommunications system for implementing the method
Procédé d'établissement d'un liaison de communication et installation de télécommunication destiné à l'exécution du procédé

(43) Veröffentlichungstag der Anmeldung: 25.03.2009
(73) Patentinhaber: Avaya GmbH & Co. KG, 60326 Frankfurt am Main (DE)
(72) Erfinder: Henneke, Dietmar, 41462 Neuss (DE); Baik, Thorsten, 41066 Mönchengladbach (DE); Boyle, Frank J., Denver CO 80202 (US); Rodewald, Frank, 50181 Bedburg (DE)
(74) Vertreter: Tergau & Pohl Patentanwälte

(56) Entgegenhaltungen:
- HILT V ET AL: "APPROACHES TO IMPLEMENTING SERVICES IN SIP NETWORKS" BELL LABS TECHNOLOGY, BELL LABORATORIES, MURREY HILL, NJ, US, Bd. 9, Nr. 3, November 2004 (2004-11), Seiten 39-44, XP001506914 ISSN: 1089-7089

## Beschreibung

Die Erfindung bezieht sich auf ein Verfahren zum Herstellen einer Kommunikationsverbindung zwischen einem anrufenden Kommunikationsendgerät und einem weiteren Kommunikationsengerät, bei dem die Verbindungsherstellung durch Austausch einer Startnachricht und einer Anzahl von Bestätigungsnachrichten zwischen dem anrufenden Kommunikationsendgerät, dem weiteren Kommunikationsendgerät und einem übergeordneten Kommunikations-Management-Modul eingeleitet wird, wobei in einer ersten Verbindungseinleitungs-Sequenz zwischen dem übergeordneten Kommunikations-Management-Modul und einem dem anrufenden Kommunikationsendgerät zugeordneten Applikations-Management-Modul die für das anrufende Kommunikationsendgerät relevanten Verbindungsmodatitäten vereinbart werden, und wobei eine zweite Verbindungseinleitungssequenz zur Vereinbarung der für das weitere Kommunikationsendgerät relevanten Verbindungsmodalitäten zwischen dem übergeordneten Kommunikations-Management-Modul und einem dem weiteren Kommunikationsendgerät zugeordneten Applikations-Management-Modul vorgesehen ist. Sie betrifft weiter eine Telekommunikationsanlage mit mindestens einem Kommunikationsendgerät und mit einem dem Kommunikationsendgerät zugeordneten Applikations-Management-Modul, über das bei der Herstellung einer Kommunikationsverbindung die für das Kommunikationsendgerät relevanten Verbindungsmodalitäten mit einem übergeordneten Kommunikations-Management-Modul vereinbart werden können.

Eine derartige Telekommunikationsanlage und ein Verfahren der genannten Art zu deren Betrieb sind beispielsweise aus dem Artikel V. Hilt et al., "Approaches to Implementing Services in SIP Networks", Bell Labs Technology, Bell Laboratories, Murray Hill, NJ, US, Bd. 9 Nr. 3, Seiten 39 bis 44 bekannt.

In modernen Telekommunikations- oder Telefonanlagen oder -systemen, wie beispielsweise Call-Centern, sind üblicherweise eine Vielzahl von Telefonie- oder Kommunikationsendgeräten mit einer zentralen Vermittlungseinheit verbunden, über die Telekommunikationsverbindungen zwischen einzelnen Kommunikations-endgeräten oder auch von von außerhalb des internen Kommunikationsnetzwerks eingehenden Anrufen mit ausgewählten Telekommunikationsendgeräten hergestellt werden. Im Rahmen dieser Telekommunikationsverbindungen werden Sprach- oder Nutzdaten zu dem jeweils ausgewählten Kommunikations-Endgerät hin und/oder von diesem an die zentrale Vermittlungseinrichtung und von dieser an das jeweilige Endgerät übertragen. Die Datenübertragung kann dabei auf herkömmliche Weise oder auch unter Nutzung des Internet-Protokolls vorgenommen werden. Als Kommunikationsendgeräte können dabei fest installierte Telefonie-oder Datenendgeräte oder Handapparate oder auch über eine drahtlose Kommunikationsverbindung an die Vermittlungseinrichtung angeschlossene Telefonieoder Datenendgeräte vorgesehen sein.

Derartige Telekommunikationsanlagen, insbesondere für Call-Center oder Contact-Center, können insbesondere auch für eine Datenübertragung über Multimedia-Anwendungen oder insbesondere auch das Internet-Protokoll ausgelegt sein. In derartigen Telekommunikations-Netzwerken, deren Kommunikationsendgeräte drahtgebunden oder auch über drahtlose Technologie miteinander bzw. mit der zentralen Vermittlungseinrichtung verbunden sein können, kann ein Nutzer eine Vielzahl von Anwendungen oder Services in Anspruch nehmen, und eine vergleichsweise hohe und komplexe Anzahl von mit der Herstellung einer Kommunikations-Verbindung einhergehenden Nebenfunktionen wie beispielsweise Gebührenerfassung, Anruffreischaltungen, Anrufweiterleitungen oder dergleichen können angeboten werden. Derartige Telekommunikationsanlagen mit einer Vielzahl angebundener und angebotener weiterer Anwendungen oder Services werden üblicherweise auch als intelligentes Netzwerk oder als so genanntes integriertes Multi-Media-System (IMS) ausgeführt, wobei gerade in derartigen integrierten Multi-Media-Systemen den Nutzern als Zusatzfunktionen, Applikationen oder Services, Voice over IP-Telefonie, Anrufbeantworterfunktionen (Voice Mail), multimediale Nachrichtenübermittlung wie beispielsweise Instant Messaging (IM), so genannte Push-to-Talk (PTT) - Services, Konferenzschaltungen (NetMeeting) und dergleichen angeboten werden. Diese Services oder Applikationen werden üblicherweise als Teil der jeweiligen IMS über zugeordnete Datenverarbeitungssysteme bereitgestellt, wobei die Ausführung derartiger Funktionen von einem übergeordneten Kommunikations-Management-Modul der IMS, dem so genannten "Session-Manager" (SM), kontrolliert wird.

Zur Verwaltung von Nebenfunktionen und Verbindungsmodalitäten, die beim Aufbau und beim Erhalt einer Kommunikations-Verbindung zwischen verschiedenen Kommunikationsendgeräten zu berücksichtigen sind, wie beispielsweise Gebührenüberwachungen, Freigaben zur Anwahl von Rufnummern, die bei der Datenübertragung zu nutzenden Protokolle und dergleichen, sind üblicherweise den einzelnen Kommunikationsendgeräten geeignete Applikations-Management-Module, auch als "Application-Server" (AS) bezeichnet, zugeordnet. Diese sind ebenfalls Teil des integrierten Multi-Media-Systems.

Zur Herstellung einer Kommunikationsverbindung in modernen Telekommunikationsanlagen kann auf das so genannte Session-Initiation-Protocol (SIP)-Konzept zurückgegriffen werden. Dabei werden vor der Herstellung der eigentlichen Kommunikationsverbindung die Kommunikationsmodalitäten durch einen geeigneten Datenaustausch zwischen den beteiligten Kommunikationsendgeräten, also insbesondere dem anrufenden Kommunikationsendgerät und dem vorgesehenen Ziel-Kommunikationsendgerät, vereinbart. In einem integrierten Multi-Media-System der beschriebenen Art wird dabei die Startnachricht nach Aktivierung des anrufenden Kommunikations-Endgeräts und der Eingabe der gewünschten ZielRufnummer durch den Nutzer üblicherweise über das übergeordnete Kommunikations-Management-Modul oder den Session-Manager an das zugeordnete Applikations-Management-Modul in Form einer sogenannten "INVITE" - Nachricht übermittelt. Nachdem durch das zugeordnete Applikations-Management-Modul oder den zugeordneten Application-Server die Verbindungsmodalitäten für das anrufende Kommunikationsendgerät, also insbesondere Freischaltungsoptionen und dergleichen, überprüft worden sind, wird die Startnachricht über den Session-Manager geeignet weitergeleitet.

Das integrierte Multimedia-System kann dabei insbesondere als so genanntes "Full-Call-Model" - System ausgestaltet sein. In derartigen Systemen ist das Applikations-Management-Modul oder der Application-Server dafür ausgelegt, bei einer vom Session-Manager oder vom übergeordneten Kommunikations-Management-Modul weitergeleiteten Start- oder "INVITE"-Nachricht sämtliche Modalitäten und Verbindungsparameter der angestrebten Kommunikations-Verbindung, also sowohl für die anrufende als auch für die angerufene Seite, zu überprüfen und gegebenenfalls geeignete Reaktionen wie Freischaltungen oder dergleichen einzuleiten. In einem derartigen Konzept führt ein derartiger Full-Call-Application-Server somit die Verbindungsmodalitäten sowohl für das anrufende Kommunikationsendgerät als auch für das angerufene Ziel-Kommunikationsendgerät aus. Damit werden vom entsprechenden Application-Server die notwendigen Überprüfungen, Freischaltungen und sonstigen Reaktionen sowohl bezüglich des anrufenden Kommunikationsendgeräts als auch bezüglich der Zielseite der angestrebten Kommunikations-Verbindung, also des angerufenen Kommunikationsendgerätes, überprüft und gegebenenfalls durchgeführt.

Derartige, auf einem sogenannten Full-Call-Model beruhende integrierte Multimedia-Systeme sind mittlerweile vergleichsweise weit verbreitet, wobei von dem jeweils zugeordneten, in der Art einer zentralen Vermittlungseinrichtung ausgeführten Application-Server insbesondere organisationsinterne Kommunikations-Verbindungen unter Rückgriff auf das Session-Initiation-Protocol gemanagt werden können. Allerdings hat sich herausgestellt, dass in derartigen Anlagen die Flexibilität beim Management der Applikationen und Services insbesondere dann eingeschränkt ist, wenn unter Rückgriff auf das genannte Session-Initiation-Protocol auch externe oder Standort übergreifende Kommunikations-Verbindungen gemanagt werden sollen. Um dementsprechend eine auch für derartige Systeme geeignete Ausweitung der Funktionalität von integrierten Multimedia-Systemen zu ermöglichen, sind anstelle der genannten Full-Call-Model-Systeme vermehrt auch so genannte Half-Call-Model-Systeme zum Einsatz gekommen, bei denen das Management von Services, Applikationen und Verbindungsmodalitäten für die anrufende Seite einerseits und die angerufene Seite andererseits sowohl örtlich als auch ressourcenseitig entkoppelt und somit unabhängig voneinander konzipiert ist. Das Management der Verbindungsmodalitäten des anrufenden Kommunikationsendgeräts erfolgt somit auf einem diesem zugeordneten Applikations-Management-Modul oder Application-Server, wohingegen das Management der Verbindungsmodalitäten für das angerufene Kommunikationsendgerät, bei dem insbesondere auch Anrufbeantworterfunktionen, Anrufweiterleitungsfunktionen und dergleichen berücksichtigt sein können, auf einem diesem zugeordneten Applikations-Management-Modul oder Application-Server vorgesehen ist. Unter geeigneten Umständen können dabei der dem anrufenden Kommunikationsendgerät zugeordnete Application-Server und der dem angerufenen Kommunikationsendgerät zugeordnete Application-Server gegebenenfalls zusammenfallen oder identisch sein; andererseits ist es aber auch möglich, dass die genannten Application-Server räumlich weit voneinander entfernt und separat voneinander aufgestellt und organisiert sind.

Bei der Einleitung einer Verbindungsherstellung in einem derartigen, auf einem Half-Call-Model beruhenden integrierten Multimedia-System wird die vom Session-Manager an den dem anrufenden Kommunikationsendgerät zugeordneten Application-Server übermittelte Start- oder "INVITE" - Nachricht von diesem durch Rücksendung einer entsprechenden Nachricht bestätigt oder quittiert, nachdem der genannte Application-Server im Rahmen einer ersten Verbindungs-Einleitungssequenz die notwendigen Autorisierungs-, Autnentifizierungs- oder Freigabeüberprüfungen durchgeführt und die sonstigen erforderlichen Verbindungsmodalitäten ausgehandelt oder eingestellt hat ("originating half"). Anschließend wird eine entsprechende Nachricht in Form einer "INVITE" - Nachricht vom Session-Manager an den dem angerufenen Kommunikationsendgerät zugeordneten Application-Server oder das zugeordnete Applikations-Management-Modul weitergeleitet, nach deren Empfang der jeweilige Application-Server im Rahmen einer zweiten Verbindungseinleitungssequenz die Überprüfung und Einrichtung der Rufund Verbindungsmodalitäten für den auf das angerufene Kommunikationsendgerät entfallenden Teil der Verbindungsparameter ("terminating half') ausführt. Nach festgestellter Freigabe und dergleichen wird die entsprechende Nachricht sodann an das angerufene Kommunikationsendgerät übermittelt. Nach der Verbindungsentgegennahme durch den Nutzer des angerufenen Kommunikationsendgeräts erfolgt sodann die Rücksendung einer Bestätigungsnachricht an den Session-Manager, die dieser gegebenenfalls geeignet an den ersten und den zweiten Application-Server zur Ausführung weiterer Nebenfunktionen und dergleichen weiterleitet. Bedarfsweise kann dabei ein mehrfacher Austausch von Bestätigungsnachrichten zwischen den genannten Komponenten vorgesehen sein, so lange, bis sämtliche erforderlichen Verbindungsmodalitäten vereinbart sind und die eigentliche Verbindung hergestellt werden kann. Die Schaltung der Sprechwege kann über die Application-Server oder auch direkt zwischen den Endgeräten erfolgen.

Die verbreitete Nutzung derartiger auf dem Half-Call-Model beruhender integrierter Multimedia-Systeme, bei denen gegebenenfalls verschiedenartige Technologien, Standards oder Protokolle geeignet miteinander verknüpft werden müssen, bedingt, dass die Kommunikation der einzelnen Applikations-Management-Module mit dem übergeordneten Kommunikations-Management-Modul nach vereinheitlichten und genau vorgegebenen Regeln erfolgt. Dabei ist insbesondere die Sequenz und Abfolge der jeweils ausgetauschten Nachrichten und auch die vom übergeordneten Kommunikations-Management-Modul erwartete Reaktion eines Application-Servers auf eine übermittelte Eingangsnachricht standardisiert, um die entsprechenden Abläufe auch auf verschiedenen Servern geeignet miteinander koordinieren zu können.

Allerdings existieren eine Vielzahl von integrierten Multimedia-Systemen, bei denen über zentrale Vermittlungseinrichtungen oder so genannte PBXen eine lokale Vermittlung zwischen als so genannte SIP- Endpunkten aufgefassten, mit der Vermittlungseinrichtung verbundenen Kommunikationsendgeräten erfolgt. In derartigen, existierenden Systemen ist die zentrale Vermittlungseinrichtung oder PBX somit auf der Grundlage eines Full-Call-Models unter Nutzung der SIP-Technologie ausgelegt. Aus Gründen der genannten notwendigen Standardisierung und Vereinheitlichung der ausgetauschten Signale ist ein derartiges, auf der Nutzung einer zentralen Vermittlungseinrichtung oder PBX beruhendes integriertes Multimedia-System somit nicht im Verbund mit auf dem Half-Call-Model beruhenden Systemen oder generell in Anbindung an einen auf dem Half-Call-Model basierenden Session-Manager nutzbar. Im Hinblick auf die zunehmende Verbreitung der Half-Call-Systeme aufgrund der erhöhten Flexibilität bei der Verwaltung der Dienste und Services ist es aber wünschenswert, auch bestehende, auf einem Full-Call-Model basierende Telekommunikationsanlagen oder - Netzwerke zu modernisieren und an die Half-Call-Technologie anzupassen, wobei dies besonders Ressourcen sparend erfolgen sollte.

Der Erfindung liegt daher die Aufgabe zugrunde, ein Verfahren zum Herstellen einer Kommunikationsverbindung der oben genannten Art, also insbesondere in einer Half-Call-Umgebung, anzugeben, mit dem auf besonders einfache und effiziente Weise auch auf einem Full-Call-Model basierende Vermittlungseinrichtungen oder PBXen als Application-Server oder Applikations-Management-Module in die genannte Half-Call-Umgebung eingebunden werden können. Des Weiteren soll eine zur Durchführung des Verfahrens besonders geeignete Telekommunikationsanlage angegeben werden.

Bezüglich des Verfahrens wird diese Aufgabe erfindungsgemäß gelöst, indem einer im Rahmen der ersten Verbindungseinleitungssequenz vom dem anrufenden Kommunikationsendgerät zugeordneten Applikations-Management-Modul an das übergeordnete Kommunikations-Management-Modul ausgegebenen Bestätigungsnachricht ein Meldeelement mit einer Steuerinformation für die zweite Verbindungseinleitungssequenz hinzugefügt wird.

Die Erfindung geht dabei von der Überlegung aus, dass eine Anbindung bestehender, nach dem Full-Call-Model ausgelegter Anlagen an eine Half-Call-Umgebung mit besonders hoher betrieblicher Sicherheit ermöglicht ist, indem die grundsätzliche Funktionalität der Full-Call-Systeme zwar beibehalten wird, wobei die Art und Sequenz der mit dem Session-Manager ausgetauschten Nachrichten aber konsequent auf die Half-Call-Umgebung ausgerichtet sein sollte. Um die betriebliche Sicherheit und auch die Kompatibilität der Systeme zu gewährleisten und Konflikte beim Verbindungsmanagement konsequent zu vermeiden, sollte selbst bei Beibehaltung der Sequenzen der mit dem Session-Manager auszutauschenden Nachrichten eine Doppelbearbeitung gleichartiger Funktionen durch eine geeignete Systemauslegung ausgeschlossen werden. Eine derartige mögliche Doppelbearbeitung könnte entstehen, indem die Verbindungsmodalitäten für das angerufene Kommunikationsendgerät zweifach, nämlich einerseits in der ohnehin als Full-Call-System ausgestalteten PBX, die als Application-Server für das anrufende Kommunikationsendgerät dient, und andererseits erneut in dem dem angerufenen Kommunikationsendgerät zugeordneten Application-Server bearbeitet werden.

Um dies zu vermeiden, sollte daher die Bearbeitung der Verbindungsmodalitäten für das angerufene Kommunikationsendgerät lediglich bedarfsweise, also nur für den Fall, dass dies nicht bereits vom Application-Server des anrufenden Kommunikationsendgerätes erledigt wurde, im dem angerufenen Kommunikationsendgerät zugeordneten Application-Server eingeleitet werden. Um eine derartige bedarfsgerechte und vom Bearbeitungszustand des vorliegenden Verbindungswunsches abhängige Nutzung der Ressourcen im zweiten Application-Server zu ermöglichen, sollte dieser mit einem Steuerelement im Rahmen der ausgetauschten Start- oder Bestätigungsnachrichten geeignet angesteuert werden. Dazu wird ein entsprechendes Meldeelement gezielt vom dem anrufenden Kommunikationsendgerät zugeordneten Application-Server in dessen Bestätigungsnachricht, mit dem er nach Abschluss der erforderlichen Vorarbeiten auf ein eingegangenes "INVITE" - Signal reagiert, an den Session-Manager und über diesen an den weiteren Application-Server weitergeleitet. Bei der hier erwähnten Bestätigungsnachricht handelt es sich ebenfalls um eine "INVITE"-Nachricht.

Eine besonders wirksame Konfliktvermeidung bei der Einleitung einer Verbindungsherstellung ist dabei erreichbar, indem gegebenenfalls, also wenn der erste, im Full-Call-Modus arbeitende Application-Server bereits die Verbindungsmodalitäten sowohl für den anrufenden als auch für den angerufenen Kommunikationsteilnehmer erledigt hat, die diesbezügliche Aktivität im weiteren, dem angerufenen Kommunikationsendgerät zugeordneten Application-Server vollständig unterdrückt wird und lediglich die für die Anbindung an die Half-Call-Umgebung notwendigen Nachrichten protokollgerecht ausgetauscht werden. Zu diesem Zweck wird vorteilhafterweise der weitere, dem angerufenen Kommunikationsendgerät zugeordnete Application-Server über das der Bestätigungsnachricht hinzugefügte Meldeelement verarbeitungsseitig geeignet "kurzgeschlossen", so dass direkt nach Eintreffen einer entsprechenden "INVITE" - Nachricht auf diesem Server zur Vermeidung der Bearbeitung weiterer Funktionalitäten direkt die entsprechende Bestätigungsnachricht an den Session-Manager zurückgegeben wird.

In alternativer oder zusätzlicher vorteilhafter Ausgestaltung kann auch vorgesehen sein, bedarfsweise den dem angerufenen Kommunikationsendgerät zugeordneten Application-Server im Sinne einer nach dem Full-Call-Modell ausgelegten Anlage zur Bearbeitung der Verbindungsmodalitäten sowohl für die anrufende als auch für die angerufene Seite zu nutzen. Hierzu wird vorteilhafterweise im Bedarfsfall diese Bearbeitung im dem anrufenden Kommunikationsendgerät zugeordneten Application Server an einem geeigneten Interrupt unterbrochen und über die Bestätigungsnachricht ein Meldeelement mit einem entsprechenden Steuerbefehl an den dem angerufenen Kommunikationsendgerät zugeordneten Application Server ausgegeben.

In besonders vorteilhafter Weise ist der zusätzlich ausgegebene Steuerbefehl auch für eine ressourcenschonende und konfliktvermeidende Umsetzung einer Weiterleitungsschaltung nutzbar. Dazu wird vorteilhafterweise über das Meldeelement an das dem umleitenden Kommunikationsendgerät zugeordnete Applications-Management-Modul ein Steuerbefehl übermittelt, der die Ausgabe einer Weiterleitungsbenachrichtigung auslöst. Auf diese Weise kann insbesondere sichergestellt werden, dass der Session-Manager oder das übergeordnete Kommunikations-Management-Modul in den Nachrichtenaustausch betreffend der Weiterleitungsschaltung eingebunden wird, so dass gegebenenfalls über den Session-Manager entsprechende übergeordnete Kontrollfunktionen wie beispielsweise eine Überprüfung, ob die Weiterleitung des Anrufs von dem ursprünglich angerufenen Kommunikationsendgerät aus überhaupt möglich oder zugelassen ist, ausgeübt werden können. Die eigentliche Weiterleitung wird dann im das Meldeelement schickenden Applications-Management-Modul durchgeführt, das heißt von dort aus wird über den Session-Manager und das dem Weiterleitungsziel zugeordnete Applications-Management-Modul eine Verbindung zum Weiterleitungsziel in oben beschriebener Weise aufgebaut.

Bezüglich der Telekommunikationsanlage wird die angegebene Aufgabe gelöst, indem das Applications-Management-Modul über eine in einem vom übergeordneten Kommunikations-Management-Modul weitergeleitete Bestätigungsnachricht integriertes Meldeelement ansteuerbar ist.

Die mit der Erfindung erzielten Vorteile bestehen insbesondere darin, dass durch die Auslegung der jeweiligen Applications-Management-Module oder Application-Server derart, dass sie von einem in eine Bestätigungsnachricht integrierten Meldeelement oder einen darin enthaltenen Steuerbefehl ansteuerbar sind, unter protokoll- und standardgemäßer Nutzung des Session-Initiation-Protocol-Konzepts eine gezielte und bedarfsgerechte Aktivierung oder Deaktivierung der einzelnen Funktionalitäten der jeweiligen Application-Server erreichbar ist. Dadurch kann unter Rückgriff auf die genannten Standards und somit unter Wahrung der Kompatibilität mit den genutzen Half-Call- Systemen einerseits die erwartete Nachrichten- oder Meldesequenz erfüllt werden, wobei andererseits bedarfsgerecht und mit hoher betrieblicher Sicherheit eine doppelte oder redundante, möglicherweise zu Konfliktfällen führende Ausführung einzelner Funktionen sicher vermieden werden kann. Damit ist unter weitgehendem Rückgriff auf bestehende Anlagen oder Komponenten auch in eigentlich nach dem Full-Call-Model ausgelegten Systemen eine Anbindung an Half-Call-Konzepte ermöglicht.

Ein Ausführungsbeispiel der Erfindung wird anhand einer Zeichnung näher erläutert. Darin zeigen die Figuren jeweils schematisch ein Diagramm zur Abfolge ausgetauschter Nachrichten in einem integrierten Multimedia-System.

Gleiche Teile sind in allen Figuren mit denselben Bezugszeichen versehen.

Die Telekommunikationsanlagen 1 gemäß den Figuren sind jeweils als integrierte Multimedia-Systeme (IMS) ausgestaltet, bei denen dem jeweiligen Nutzer über die Bereitstellung üblicher Telefonfunktionen hinaus eine Vielzahl weiterer Funktionen, Applikationen oder Services wie beispielsweise Voice over IP - Services, Anrufbeantworterfunktionen (Voice Mail), Weiterleitung von Sprach-, Text- oder sonstigen multimedialen Nachrichten, Instant Messaging (IM), Gebührenerfassungsfunktionen oder dergleichen angeboten wird. Die Telekommunikationsanlage 1 umfasst dabei jeweils eine Mehrzahl von Kommunikationsendgeräten, die drahtlos oder drahtgebunden an ein übergeordnetes Kommunikations-Management-Modul 2, auch als "Session-Manager" (SM) bezeichnet, angeschlossen sind.

Zur Herstellung einer Telefon- oder Telekommunikationsverbindung zwischen einzelnen Kommunikationsendgeräten ist die jeweilige Telekommunikationsanlage 1 zur Nutzung des Session Initiation Protocol (SIP) ausgelegt. Dabei werden zur Einleitung einer Verbindungsherstellung von einem anrufenden Kommunikationsendgerät, dem Session-Manager oder übergeordneten Kommunikations-Management-Modul 2 und dem angerufenen Kommunikationsendgerät eine Startnachricht und eine Anzahl von Bestätigungsnachrichten ausgetauscht, über die die Verbindungsmodalitäten für die herzustellende Kommunikations-Verbindung ausgehandelt werden. Zur Verdeutlichung der Abläufe bei den dabei ausgetauschten Nachrichten sind diese in den Figuren durch die jeweiligen Pfeile symbolisiert, wobei die Nummerierung der Pfeile dem Ablauf der Nachrichten entsprechend vorgenommen ist. Des Weiteren sind in den Figuren von den vorgesehenen Kommunikationsendgeräten lediglich zwei, nämlich das anrufende Kommunikationsendgerät 4 und das angerufene Kommunikationsendgerät 6, dargestellt.

Mit der Herstellung einer Telekommunikationsverbindung im Rahmen des Session Initiation Protocol werden sowohl für das anrufende Kommunikationsendgerät 4 als auch für das angerufene Kommunikationsendgerät 6 jeweils Nebenfunktionen ausgeführt, wobei beispielsweise Freigabe- oder Zugangsberechtigungen, Gebühreninformationen oder dergleichen überprüft und Zusatzfunktionen wie beispielsweise Anrufweiterleitungsschaltungen, Anrufbeantworterfunktionen, Zielfreigabeüberprüfungen und dergleichen durchgeführt werden. Für derartige Nebenfunktionen ist dem anrufenden Kommunikationsendgerät 4 ein erstes Applikations-Management-Modul 8, ein so genannter Application-Server (AS), zugeordnet, der beispielsweise auf einer zentralen Vermittlungseinheit oder einer Datenverarbeitungseinheit der jeweiligen Telekommunikationsanlage 1 installiert sein kann. Gleichermaßen ist auch dem angerufenen Kommunikationsendgerät 6 ein Applikations-Management-Modul 10 zugeordnet, über das die entsprechenden Nebenoder Zusatzfunktionen für das angerufene Kommunikationsendgerät 6 vereinbart und gegebenenfalls ausgeführt werden.

In einer Telekommunikationsanlage 1, bei der das anrufende Kommunikationsendgerät 4 und das angerufene Kommunikationsendgerät 6 innerhalb eines einheitlichen, vorzugsweise örtlich zusammenhängenden Verbundes in einem gemeinsamen Kommunikationsnetzwerk mit einer gemeinsamen Vermittlungseinheit vorgesehen sind, könnten die genannten Neben- oder Zusatzfunktionen im Zusammenhang mit der Herstellung einer Kommunikationsverbindung sowohl für das anrufende Kommunikationsendgerät 4 als auch für das angerufene Kommunikationsendgerät 6 in einer gemeinsamen, zentralen Vermittlungs- oder Datenverarbeitungseinheit ausgeführt werden. In diesem Fall fallen das erste Applikations-Management-Modul 8 und das zweite Applikations-Management-Modul 10 logisch, strukturell und auch körperlich zu einer einzigen Einheit zusammen. Eine derartig aufgebaute Anlage wird nach dem sogenannten "Full-Call-Model" betrieben, da von einer einzigen Anlage aus sämtliche Zusatz- oder Nebenfunktionen der herzustellenden Telekommunikationsverbindung gebündelt und zusammengefasst ausgeführt werden. Problematisch bei einem derartigen, auf dem Full-Call-Model basierenden System ist aber die vergleichsweise eingeschränkte Flexibilität bei der Anbindung räumlich oder organisatorisch entfernter Strukturen und bei der wahlweisen Zuschaltung weiterer Endgeräte aus orts- oder organisationsfremden Einheiten.

Um die Nutzung des Session Initiation Protocols auch für orts- oder organisationsübergreifende Kommunikations-Verbindungen zugänglich zu machen, wurde daher in jüngeren Entwicklungen vermehrt das genannte Full-Call-Model durch das so genannte Half-Call-Model ersetzt, nachdem auch die Telekommunikationsanlagen 1 der vorliegenden Ausführungsbeispiele ausgeführt sind. Bei einem derartigen Half-Call-Model sind das dem anrufenden Kommunikationsendgerät 4 zugeordnete erste Applikations-Management-Modul 8 oder der Application-Server sowohl logisch als auch strukturell unabhängig von dem dem angerufenen Kommunikationsendgerät 6 zugeordneten zweiten Applikations-Management-Modul 10 ausgeführt. Das erste Applikations-Management-Modul 8 handelt dabei in einer ersten Verbindungseinleitungssequenz bei der Einleitung einer Verbindungsherstellung die Verbindungsmodalitäten für das anrufende Kommunikationsendgerät 4 aus, wobei gegebenenfalls auch Nebenfunktionen ausgeführt und Freigabevorgaben und dergleichen überprüft und berücksichtigt werden. Nachdem dabei eine erste vorbereitende Phase abgeschlossen wurde (auch bezeichnet als "originating Half Call"), übernimmt in einer zweiten Verbindungseinleitungssequenz das dem angerufenen Kommunikationsendgerät 6 zugeordnete zweite Applikations-Management-Modul 10 die Vereinbarung der Verbindungsmodalitäten sowie die Ausführung von Nebenfunktionen für das angerufene Kommunikationsendgerät 6 (auch bezeichnet als "terminating Half Call"). Das Half-Call-Model beinhaltet aber weiterhin die Möglichkeit, dass den Endgeräten 4 und 6 das gleiche Applikations-Management-Modul zugeordnet wird.

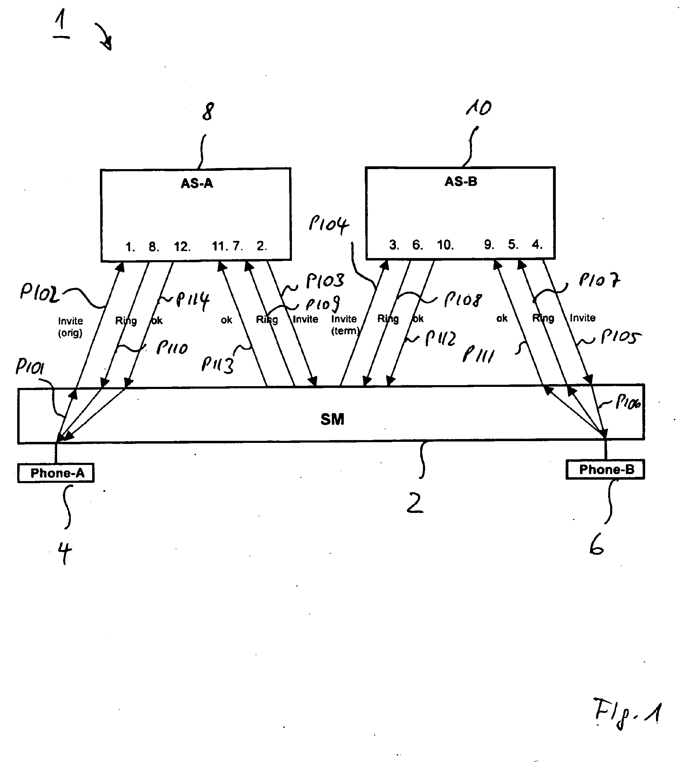

Die Sequenz beim Austauschen von Nachrichten bei der Einleitung einer Verbindungsherstellung nach diesem "Half-Call-Model" einer an sich bekannten Anlage ist schematisch im Diagramm nach Figur 1 dargestellt. Nach einer Aktivierung des ersten Kommunikationsendgeräts 4 durch den Nutzer, also beispielsweise nach Abheben des Telefonhörers und Eingabe der gewünschten Zielrufnummer, sendet das erste Kommunikationsendgerät 4 im Rahmen des Session Initiation Protocols eine durch den Pfeil P101 symbolisierte Startnachricht (auch bezeichnet als "INVITE" - Nachricht) an das übergeordnete Kommunikations-Management-Modul 2. Dieses übermittelt die Start- oder "INVITE" - Nachricht an das dem ersten Kommunikationsendgerät 4 zugeordnete erste Applikations-Management-Modul 8 oder den entsprechenden Application-Server, wie dies durch den Pfeil P102 symbolisiert ist. In Reaktion auf diese eintreffende "INVITE" - oder Startnachricht führt der genannte Application-Server eine Reihe von dem anrufenden Kommunikationsendgerät 4 zugeordneten Zusatz- oder Nebenfunktionen aus, wobei beispielsweise überprüft werden kann, ob der Anrufer eine Freigabe für die gewünschte Kommunikations-Verbindung hat oder dergleichen. Nach Abschluss dieser ersten Funktionen übermittelt der genannte Application-Server in der Art einer Quittung oder Bestätigung eine entsprechende "INVITE" - Nachricht mit der Information, dass die genannten Funktionen ausgeführt sind ("orig"), zurück an den Session-Manager oder das übergeordnete Kommunikations-Management-Modul 2, wie dies durch den Pfeil P103 dargestellt ist.

Zur Einleitung einer darauf folgenden zweiten Verbindungseinleitungssequenz sendet der Session-Manager daraufhin, wie durch den Pfeil P104 angedeutet, ein entsprechendes "INVITE" - oder Startsignal an das dem angerufenen Kommunikationsendgerät 6 zugeordnete Applikations-Management-Modul 10, das daraufhin die Verbindungsmodalitäten für den auf das angerufene Kommunikationsendgerät 6 bezogenen Anteil der Telekommunikationsverbindung ("terminating Half Call") aushandelt sowie weitere Zusatz- oder Nebenfunktionen ausführt wie beispielsweise die Überprüfung von Anrufumleitungen, Weiterleitungsschaltungen, Anrufbeantworterfunktionen oder dergleichen. Nach dem dies vollzogen ist, übermittelt der dem angerufenen Kommunikationsendgerät 6 zugeordnete Application-Server eine entsprechende Quittung oder Bestätigung an den Session-Manager, der daraufhin ein entsprechendes Startsignal an das angerufene Kommunikationsendgerät 6 übermittelt, vgl. Pfeile P105, P106.

Zur Signalisierung des eingehenden Anrufs startet dieses somit ein Läutesignal oder eine anderweitige Anzeige, die den Nutzer auf den eingehenden Anruf aufmerksam machen soll. Eine Bestätigung über den vorgenommenen Benachrichtigungsvorgang wird sodann, wie durch die Pfeile P107, P108, P109, P110 angedeutet, über den Session-Manager und die genannten Application-Server an das anrufende Kommunikationsendgerät 4 zurückgeleitet ("ring"), so dass der anrufende Nutzer ein Läutesignal beim angerufenen Kommunikationsendgerät 6 vernehmen kann. Sobald der Nutzer des angerufenen Kommunikationsendgeräts 6 den Anruf entgegennimmt und das entsprechende Endgerät geeignet aktiviert, beispielsweise durch Abnehmen des Hörers, kommt die Kommunikationsverbindung zustande, was ebenfalls durch eine geeignete Sequenz von Bestätigungsnachrichten, wie durch die Pfeile P111, P112, P113, P114 angedeutet, über den Session-Manager und die Application-Server an das anrufende Kommunikationsendgerät 4 übermittelt wird.

Aufgrund der logischen und funktionalen Trennung der Application-Server voneinander hat ein auf diesem Half Call-Model beruhendes Kommunikations-Management den Vorteil, dass auch systemübergreifend und örtlich unabhängig Telekommunikationsverbindungen hergestellt und verwaltet werden können, wobei die jeweiligen Application-Server unabhängig voneinander und angepasst an lokale Vorgaben oder Randbedingungen den jeweiligen Anteil der Kommunikations-Verbindung verwalten können. Damit ist orts- und systemunabhängig die Einbindung verschiedenartigster lokaler Systeme zur Herstellung gewünschter Kommunikationsverbindungen ermöglicht. Gerade um aber eine derartige flexible Anbindung auch verschiedenartiger Systeme mit hoher betrieblicher Sicherheit zu gewährleisten, ist zwingend die ordnungsgemäße und standardisierte Wahrung der genannten Befehlssequenzen und Nachrichtensequenzen beim Informationsaustausch mit dem Session-Manager oder mit dem übergeordneten Kommunikations-Management-Modul 2 erforderlich. Die Nutzung eines lokalen Kommunikationsnetzwerks oder einer lokalen Kommunikationsanlage in einem integrierten Multimedia-System nach dem Prinzip des in Figur 1 dargestellten Verbindungsherstellungsprozesses setzt also voraus, dass die jeweilige Anlage zum Empfang der jeweils eingehenden Nachrichten und zur frist- und formgerechten Rückgabe der jeweiligen Bestätigungs- oder Quittungsnachrichten ausgelegt und geeignet ist.

Dieser Aspekt kann sich vergleichsweise nachteilig auswirken, wenn bestehende Kommunikationsanlagen zum Betrieb in einem derartigen Half-Call-Model und damit zur Anbindung an zunehmend verbreitete Kommunikationsstandards ertüchtigt werden sollen, die intern auf der Nutzung einer zentralen Vermittlungseinheit im Sinne eines Full-Call-Models beruhen. Eine derartige Anlage ist nämlich darauf ausgerichtet, sowohl für den eingehenden Anteil des Anrufs ("originating Half Call") als auch für den angerufenen Teil der Kommunikationsverbindung ("terminating Half Call") die entsprechenden Modalitäts- und Zusatzfunktionen auszuführen. Im Verbund mit Systemen nach dem Half-Call-Model kann es dabei in unerwünschter und für den Betrieb der Anlage insgesamt nachteiliger oder sogar unakzeptabler Weise zur Doppelausführung von Funktionen, zur Doppelbelegung entsprechender Speicherbereiche und zu sonstigen Konfliktfällen kommen.

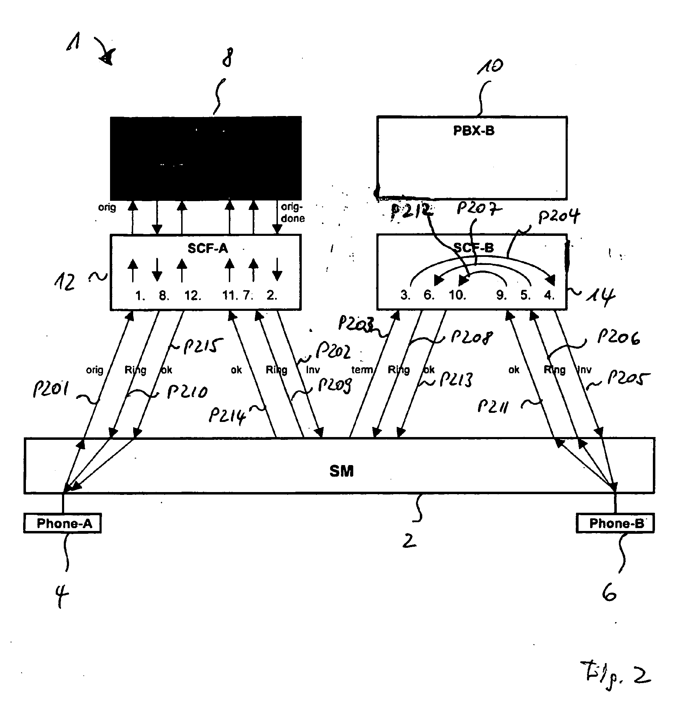

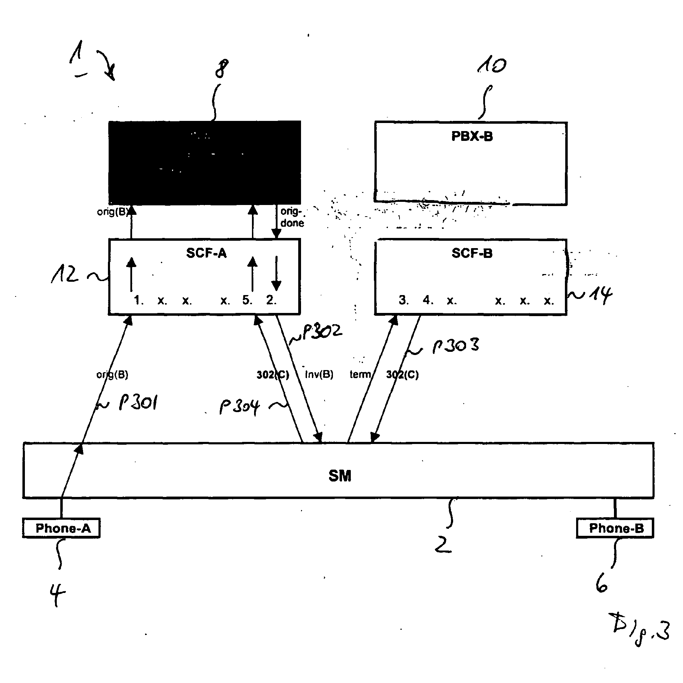

Um dennoch unter konsequenter Vermeidung derartiger Konfliktsituationen und bei besonders günstiger Ausnutzung vorhandener Ressourcen nach dem Full-Call-Model arbeitende Anlagen in einen derartigen Verbund einbinden zu können, ist erfindungsgemäß nunmehr vorgesehen, in Ergänzung zu den genannten auszutauschenden Nachrichten bei der Nachrichtenübermittlung im Rahmen des Session Initiation Protocols ein weiteres Meldeelement hinzuzufügen, mit dem einer der genannten Application-Server einen anderen der genannten Application-Server direkt ansteuern und die Ausführung der genannten Funktionalitäten unmittelbar kontrollieren oder modifizieren kann. Ausführungsbeispiele hierfür sind in den Figuren 2, 3 dargestellt. In diesen Darstellungen ist dem ersten Applikations-Management-Modul 8 und dem zweiten Applikations-Management-Modul 10 jeweils ein Session-Control-Modul 12 bzw. 14 vorgeschaltet, das eine bedarfsweise Anpassung des Nachrichtenaustauschs zwischen dem übergeordneten Kommunikations-Management-Modul 2 und dem jeweiligen Applikations-Management-Modul 8 bzw. 10 vornimmt. Das jeweilige Session-Control-Modul 12, 14 kann dabei als selbständige Einheit ausgeführt oder auch in das jeweilige Applikations-Management-Modul 8 bzw. 10 integriert sein.

Für die nachfolgend anhand der Figuren 2, 3 erläuterten Nachrichtensequenzen ist bedeutsam, dass die Darstellungen eine logische und funktionale Zuordnung der jeweiligen Komponenten, insbesondere im Hinblick auf die vorgesehene Verwendung der Application-Server zur Abwicklung der ersten bzw. der zweiten Hälfte der jeweiligen Telekommunikationsverbindung, repräsentieren. In körperlicher oder struktureller Hinsicht können die Application-Server dennoch durch ein und dieselbe Einheit realisiert sein. Der erfindungsgemäße Grundgedanke ist dabei, dass existierende, an sich eigentlich nach dem Full-Call-Model arbeitende Vermittlungseinheiten oder PBXen als Application-Server in einem integrierten Multimedia-System eingebunden werden, wobei dem Session-Manager jedoch durch Art und Sequenz der ausgetauschten Nachrichten jeweils nach dem Full-Call-Model arbeitenden Application-Server eine Half-Call-Umgebung suggeriert wird. Dadurch wird sichergestellt das Funktionalitäten oder Zusatzfunktionen nicht doppelt ausgeführt werden. Das Konzept kann dabei insbesondere in Systemen eingesetzt werden, in denen die betroffenen SIP-Endpunkte sämtlich oder zumindest teilweise einem Application-Server oder einer PBX zugewiesen sind. Dazu wird in den SIP-Nachrichten ein weiterer Parameter oder ein zusätzliches Meldeelement übermittelt, mit dem dem empfangenden Application-Server ein Steuerbefehl übermittelt wird, anhand dessen die Reaktion auf ein eintreffendes INVITE-oder Startsignal festgelegt wird. Vorzugsweise ist dabei das Session-Control-Modul 12,14 der jeweiligen PBX vorgeschaltet, sodass in einem einfachen Fall einer direkten Antwort oder einer Weiterleitungsschaltung als Reaktion auf ein eintreffendes Start- oder INVITE-Signal dieses Session-Control-Modul 12,14 auf das eintreffende Signal direkt antworten kann, ohne dass die dahinter geschaltete PBX überhaupt aktiviert wird.

In der in Figur 2 dargestellten Nachrichtensequenz ist dabei vorgesehen, dass bedarfsweise das dem angerufenen Kommunikationsendgerät 6 zugeordnete Applikations-Management-Modul 10 vollständig umgangen oder "unterdrückt" wird, wenn sämtliche Verbindungsmodalitäten bereits vom anruferseitig vorgesehenen Applikations-Management-Modul 8 bearbeitet wurden. Bei der Einleitung einer Verbindungsherstellung in einem derartigen Fall sendet im Ausführungsbeispiel gemäß Figur 2 das anrufende Kommunikationsendgerät 4 eine durch den Pfeil P201 symbolisierte Startnachricht über das übergeordnete Kommunikations-Management-Modul 2 an das ihm zugeordnete Applikations-Management-Modul 8. Diese Startnachricht geht zunächst im Session-Control-Modul 12 ein und wird von diesem an das eigentliche Applikations-Management-Modul 8 weitergeleitet, das im Ausführungsbeispiel als PBX nach dem Full-Call-Modell ausgeführt ist. Nach Eintreffen dieser Startnachricht führt das Applikations-Management-Modul 8 in der Art eines Full-Call-Systems sowohl für die Anruferseite als auch für die angerufene Seite die Vereinbarung der Verbindungsmodalitäten und auch die für beide genannten Seiten vorgesehenen Zusatzfunktionen, Freigabeüberprüfungen und dergleichen aus. Das Applikations-Management-Modul 8 dient in diesem Fall somit als "Full-Call-Feature Server" sowohl für das anrufende Kommunikationsendgerät 4 als auch für das angerufene Kommunikationsendgerät 6.

Anschließend übermittelt das Applikations-Management-Modul 8 über das zugeordnete Session-Control-Modul 12 eine durch den Pfeil P202 symbolisierte Bestätigungsnachricht an das übergeordnete Kommunikations-Management-Modul 2. In dieser Bestätigungsnachricht ist zusätzlich zu den üblichen Meldeelementen ein weiteres Meldeelement mit einer Steuerinformation enthalten, in der zum Ausdruck gebracht ist, dass sämtliche notwendigen Funktionen bereits vom Applikations-Management-Modul 8 ausgeführt sind. Dementsprechend ist im genannten zusätzlichen Meldeelement die Steuerinformation "Shortcut" oder "Überbrückung" für das dem angerufenen Kommunikationsendgerät 6 zugeordnete Applikations-Management-Modul 10 enthalten.

Dieses zusätzliche Meldeelement wird im Rahmen einer durch den Pfeil P203 symbolisierten Nachricht vom Kommunikations-Management-Modul 2 an das dem angerufenen Kommunikationsendgerät 6 zugeordnete Applikations-Management-Modul 10 übermittelt. Dieses ist durch das genannte Meldeelement steuerbar ausgeführt, wobei im Ausführungsbeispiel bereits im vorgeschalteten Session-Control-Modul 14 erkannt wird, dass aufgrund des übermittelten Meldeelements "Shortcut" die Vereinbarung von Verbindungsmodalitäten für die herzustellende Kommunikationsverbindung bereits im Applikations-Management-Modul 8 erfolgt ist und daher eine erneute Bearbeitung im Applikations-Management-Modul 10 unterbleiben soll. Das Session-Control-Modul 14 überbrückt daher, wie durch den Pfeil P204 angedeutet, zur Vermeidung einer Doppelbearbeitung die Aktivierung des eigentlichen Applikations-Management-Moduls 10 und leitet eine entsprechende, durch den Pfeil P205 angedeutete Nachricht direkt an das angerufene Kommunikationsendgerät 6 weiter.

In Reaktion auf die eingetroffene Startnachricht fängt das angerufene Kommunikationsendgerät 6 an zu läuten, was durch eine entsprechende, durch den Pfeil P206 symbolisierte Bestätigungsnachricht über das übergeordnete Kommunikations-Management-Modul 2 bestätigt wird. Diese Bestätigungsnachricht wird im Session-Control-Modul 14, wie durch den Pfeil P207 angedeutet, unter Umgehung des Applikations-Management-Moduls 10 an das übergeordnete Kommunikations-Management-Modul 2 zurückgegeben, wie durch den Pfeil P208 angedeutet. Von dort aus wird die genannte Bestätigungsnachricht, wie durch die Pfeile P209 und P210 angedeutet, über das Session-Control-Modul 12 und das Applikations-Management-Modul 8 unter erneuter Zwischenschaltung des übergeordneten Kommunikations-Management-Moduls 2 an das angerufene Kommunikationsendgerät 4 übermittelt, so dass der dortige Nutzer das Läuten des Endgeräts im angerufenen Kommunikationsendgerät 6 wahrnehmen kann.

Nachdem der angerufene Teilnehmer, beispielsweise durch Abheben des Telefonhörers oder eine andere geeignete Aktivierung des angerufenen Kommunikationsendgerätes 6, den Anruf entgegennimmt, wird erneut unter Rückgriff auf das übergeordnete Kommunikations-Management-Modul 2 eine entsprechende Bestätigungsnachricht vom angerufenen Kommunikationsendgerät 6 an das anrufende Kommunikationsendgerät 4 übermittelt, wie durch die Pfeile P211, P212, P213, P214 und P215 angedeutet. Auch diese Nachricht wird dabei, wie durch den Pfeil P212 symbolisiert, unter Umgehung des dem angerufenen Kommunikationsendgerät 6 zugeordneten Applikations-Management-Moduls 10 übermittelt. Nach Übermittlung dieser Bestätigungsnachricht an das anrufende Kommunikationsendgerät 4 kommt so dann die Kommunikationsverbindung zustande.

Im Ausführungsbeispiel nach Figur 2 fungiert somit das Applikations-Management-Modul 8 in der Art eines Full-Call-Servers zur Ausführung der Funktionalitäten für sowohl das anrufende Kommunikationsendgerät 4 als auch für das angerufene Kommunikationsendgerät 6, wobei durch Übermittlung eines geeigneten Meldeelements oder einer Steuerfunktion für das dem angerufenen Kommunikationsendgerät 6 zugeordnete Applikations-Management-Modul 10 sichergestellt wird, dass dessen Aktivierung unterbleibt. Durch einen derartigen Aufbau ist somit sichergestellt, dass das ohnehin seiner Struktur nach als herkömmliche PBX im Sinne eines Full-Call-Modells aufgebaute Applikations-Management-Modul 8 nachrichtenseitig unter Rückgriff auf seine ohnehin hinterlegten Funktionalitäten angesprochen werden kann. "Aus Sicht" dieser Einheit kann die Kommunikationsverbindung somit im Rahmen eines Full-Call-Modells hergestellt werden. Andererseits erfolgt durch den genannten Nachrichtenaustausch "aus Sicht" des Session Managers oder des übergeordneten Kommunikations-Management-Moduls 2 die Herstellung der Kommunikationsverbindung im Rahmen und gemäß des Standards eines Half-Call-Modells, da sämtliche erwarteten und vorgesehenen Nachrichten ordnungsgemäß und in geeigneter Sequenz mit dem übergeordneten Kommunikations-Management-Modul 2 ausgetauscht werden. Hier sei angemerkt, dass im SIP ein privates Meldeelement in eine Meldung eingefügt werden darf, welches von allen Komponenten, die dieses Meldeelement nicht kennen, ignoriert und unverändert weitergeschickt werden muss.

Im in Figur 3 dargestellten Diagramm ist hingegen die Nachrichtensequenz für den Fall wiedergegeben, dass eine Weiterleitungsschaltung für das angerufene Kommunikationsendgerät 6 eingerichtet ist. Auch in diesem Fall ist das dem anrufenden Kommunikationsendgerät 4 zugeordnete Applikations-Management-Modul 8 als "Full-Call Feature Server" im Sinne einer PBX ausgelegt, so dass die Anrufweiterleitung und die Ausführung der dafür notwendigen Funktionalitäten und dergleichen grundsätzlich innerhalb des Applikations-Management-Moduls 8 ausgeführt werden könnten. Im Sinne einer konsequenten Anbindung an eine Half-Call-Umgebung hat dies jedoch den Nachteil, dass eine derartige serverinterne Durchführung der Anrufweiterleitung unter Umgehung des übergeordneten Kommunikations-Management-Moduls 2 oder des Session Managers erfolgen würde, so dass der Session Manager in diesem Fall keinerlei Eingriffsmöglichkeiten bei der Einrichtung der Kommunikationsverbindung hätte. Diese könnten aber beispielsweise zur Ausführung von für das angerufene Kommunikationsendgerät 6 vorgesehenen Zusatzfunktionen oder beispielsweise Freigabeüberprüfungen erforderlich sein, wenn zunächst überprüft werden muss, ob beispielsweise aus Gebührengründen oder dergleichen die eingestellte Anrufweiterleitung überhaupt freigegeben sein soll.

Um demzufolge bei einer derartigen Anrufweiterleitung die mit dem übergeordneten Kommunikations-Management-Modul 2 oder dem Session Manager auszutauschenden Nachrichtensequenz konsequent an die vorgesehene Half-Call-Umgebung anzubinden, sendet auch im Ausführungsbeispiel gemäß Figur 3 das Applications-Management-Modul 8, in Reaktion auf eine eintreffende Startnachricht eine geeignete, um ein entsprechendes Meldeelement mit einer diesbezüglichen Steuerinformation erweiterte Bestätigungsnachricht zurück an das übergeordnete Kommunikations-Management-Modul 2. Der dabei übermittelte Steuerbefehl löst die Ausgabe einer Weiterleitungsbenachrichtigung aus, mit der ein "Pseudoanruf' am angerufenen Kommunikationsendgerät 6 ausgelöst wird. Durch diesen "Pseudoanruf" werden die vom Session Manager oder übergeordneten Kommunikations-Management-Modul 2 erwarteten Nachrichtensequenzen konsequent eingehalten.

Wie im Ausführungsbeispiel nach Figur 3 durch den Pfeil P301 dargestellt, sendet zur Einleitung der Verbindungsherstellung das anrufende Kommunikationsendgerät 4 nach einer entsprechenden Aktivierung durch den Nutzer und der Eingabe der von ihm gewünschten Ziel- Rufnummer eine entsprechende Startnachricht an das zugeordnete Applikations-Management-Modul 8, die vom übergeordneten Kommunikations-Management-Modul 2 über das Session-Control-Modul 12 an dieses weitergeleitet wird. In Reaktion darauf führt das als "Full-Call-Server" ausgeführte Applikations-Management-Modul 8 sowohl für die Anruferseite als auch für die angerufene Seite sämtliche Zusatzfunktionen und Funktionalitäten zur Herstellung der Verbindungsmodalitäten aus.

Dabei wird festgestellt, dass zu dem angerufenen Kommunikationsendgerät 6 eine Anrufweiterleitung zu einem weiteren, nicht näher dargestellten Kommunikationsendgerät hinterlegt und aktiviert ist. Obwohl demzufolge unmittelbar alle Funktionen bezüglich dieses Kommunikationsendgerätes 6 ausgeführt werden könnten, wird die weitere Bearbeitung zunächst unterbrochen und ein geeignet an einer Half-Call-Umgebung angepasster Nachrichtenaustausch eingeleitet. Dazu übermittelt das Applikations-Management-Modul 8 eine durch den Pfeil P302 symbolisierte Nachricht an den Session Manager oder das übergeordnete Kommunikations-Management-Modul 2, die zu Wahrung der vom Session Manager im Rahmen einer Half-Call-Umgebung erwarteten Nachrichtensequenz als INVITE-Nachricht für das angerufene Kommunikationsendgerät 6 ausgeführt ist.

Dieser INVITE- Nachricht ist ein weiteres, proprietäres Meldeelement hinzugefügt, das als Steuerbefehl für die Ausgabe einer Weiterleitungsbenachrichtigung ("Forward") ausgeführt ist. In einer bevorzugten Ausführungsform der Erfindung wird zusätzlich die Zielrufnummer der Weiterleitung in einem weiteren proprietären Meldeelement übertragen. Anschließend übermittelt der Session Manager oder das übergeordnete Kommunikations-Management-Modul 2 diese INVITE-Nachricht zum dem Applikations-Management-Modul 10 vorgeschalteten Session-Control-Modul 14. Bei dieser Gelegenheit kann der Session Manager bedarfsweise in die weitere Ausgestaltung der Kommunikationsverbindung eingreifen (beispielsweise einen Abbruch iniziieren, falls für das angerufene Kommunikationsendgerät 6 keine Freigabe für Weiterleitungen, beispielsweise aus Gebührengründen oder dergleichen vorliegt, oder Zusatzfunktionen für das Kommunikationsendgerät 6 ausführen).

In Reaktion auf das eintreffende INVITE-Signal und den darin eingebundenen Steuerbefehl zur Weiterleitung antwortet das Applikations-Management-Modul 10 über das ihm vorgeschaltete Session-Control-Modul 14 unmittelbar und ohne weitere Aktivierung von Funktionen innerhalb des Applikations-Management-Moduls 10 durch eine Weiterleitungsbenachrichtigung, in der die Zielrufnummer des durch die Weiterleitung angesprochenen Kommunikationsendgeräts in einem standardisierten Meldeelement angegeben ist. Dies ist durch den Pfeil P303 signalisiert, der insbesondere im Rahmen des SIP-Protokolls die Nachricht "302 Moved Temporarily" repräsentiert und zusätzlich die Zielrufnummer der Weiterleitung enthalten kann.

Die entsprechende Weiterleitungsbenachrichtigung wird vom übergeordneten Kommunikations-Management-Modul 2, wie durch den Pfeil P304 angedeutet, über das Session-Control-Modul 12 an das Applikations-Management-Modul 8 zurückgeleitet, so dass in Reaktion hierauf nunmehr das Applikations-Management-Modul 8 die weitere Bearbeitung der Verbindungsherstellung wieder aufnehmen kann.

Die weiteren Schritte werden nunmehr geeignet im Hinblick auf das Kommunikationsendgerät, auf das weitergeleitet wurde, ausgeführt, wobei insbesondere für dieses Kommunikationsendgerät nunmehr bedarfsweise wiederum in der Art eines Full-Call-Systems sämtliche Funktionalitäten durchgeführt werden können. Dabei wird gegebenenfalls die weitere Bearbeitung vollständig vom Applikations-Management-Modul 8 durchgeführt, wobei das dem endgültig angerufenen Kommunikationsendgerät zugeordnete Applikations-Management-Modul entsprechend überbrückt wird.

Durch die genannten Ausgestaltungen der Nachrichtensequenzen und insbesondere durch die Übermittlung eines Meldeelements mit einer Steuerinformation für die Application Server ist es somit ermöglicht, mit vergleichsweise geringfügigen Veränderungen existierende PBXen als Application Server in einer IMS-Umgebung basierend auf dem Half-Call-Modell zu nutzen. Dabei werden konsequent Redundanzen und Doppelverarbeitungen, die zu Konfliktfällen führen könnten, vermieden, wobei eine besonders wirksame Nutzung vorhandener Ressourcen ermöglicht ist.

### Bezugszeichenliste

- 1: Telekommunikationsanlagen
- 2: Kommunikations-Management-Modul
- 4: Kommunikationsendgerät
- 6: Kommunikationsendgerät
- 8: Applikations-Management-Modul
- 10: Applikations-Management-Modul
- 12, 14: Session-Control-Modul
- P101...P304: Nachrichten / Meldungen

## Patentansprüche

1. Verfahren zum Herstellen einer Kommunikationsverbindung zwischen einem anrufenden Kommunikationsendgerät (4) und einem weiteren Kommunikationsendgerät (6), bei dem die Verbindungsherstellung durch Austausch einer Startnachricht und einer Anzahl von Bestätigungsnachrichten zwischen dem anrufenden Kommunikationsendgerät (4), dem weiteren Kommunikationsendgerät (6) und einem übergeordneten Kommunikations-Management-Modul (2) eingeleitet wird, wobei in einer ersten Verbindungseinleitungssequenz zwischen dem übergeordneten Kommunikations-Management-Modul (2) und einem dem anrufenden Kommunikationsendgerät (4) zugeordneten Applikations-Management-Modul (8) die für das anrufende Kommunikationsendgerät (4) relevanten Verbindungsmodalitäten vereinbart werden, und wobei eine zweite Verbindungseinleitungssequenz zur Vereinbarung der für das weitere Kommunikationsendgerät (6) relevanten Verbindungsmodalitäten zwischen dem übergeordneten Kommunikations-Management-Modul (2) und einem dem weiteren Kommunikationsendgerät (6) zugeordneten Applikations-Management-Modul (10) vorgesehen ist,
**dadurch gekennzeichnet, dass**
einer im Rahmen der ersten Verbindungseinleitungssequenz vom dem anrufenden Kommunikationsendgerät (4) zugeordneten Applikations-Management-Modul (8) an das übergeordnete Kommunikatibns-Management-Moduf (2) ausgegebenen Bestätigungsnachricht ein Meldeelement mit einer Steuerinformation für die zweite Verbindungseinleitungssequenz hinzugefügt wird.

2. Verfahren nach Anspruch 1, bei dem über das Meldeelement die Vereinbarung der für das weitere Kommunikationsendgerät (6) relevanten Verbindungsmodalitäten zwischen dem übergeordneten Kommunikations-Management-Modul (2)
und einem dem weiteren Kommunikationsendgerät (6) zugeordneten Applikations-Management-Modul (10) unterdrückt wird.

3. Verfahren nach Anspruch 1 oder 2, bei dem über das Meldeelement an das dem weiteren Kommunikationsendgerät (6) zugeordnete Applikations-Management-Modul (10) ein Steuerbefehl übermittelt wird, der die Ausgabe einer Weiterleitungsbenachrichtigung auslöst.

4. Telekommunikationsanlage (1) mit mindestens einem Kommunikationsendgerät (4, 6) und mit einem dem Kommunikationsendgerät (4, 6) zugeordneten Applikations-Management-Modul (8, 10), über das bei der Herstellung einer Kommunikationsverbindung die für das Kommunikationsendgerät (4, 6) relevanten Verbindungsmodalitäten mit einem übergeordneten Kommunikations-Management-Modul (2) gemäß Anspruch 1 vereinbar sind.

## Claims

1. Method for establishing a communication connection between a calling communication terminal (4) and another communication terminal (6), wherein the establishment of the connection is initiated by exchanging a start message and a number of confirmation messages between the calling communication terminal (4), the other communication terminal (6) and a superset communication management module (2), the connection modalities relevant for the calling communication terminal (4) being declared in a first connection initialization sequence between the superset communication management module (2) and an application management module (8) associated with the calling communication terminal (4), and a second connection initialization sequence being provided for declaring the connection modalities between the superset communication management module (2) and an application management module (10) associated with the other calling communication terminal (6), relevant for the other communication terminal (6),
**characterized in that**,
to a confirmation message output by the application management module (8) associated with the calling communication terminal (4) to the superset communication management module (2), as part of the first connection initialization sequence, a signaling element with a control information for the second connection initialization sequence is added.

2. Method according to claim 1, wherein the declaration of the connection modalities between the superset communication management module (2) and an application management module (10) associated with the other communication terminal (6), relevant for the other communication terminal (6), is suppressed via the signaling element.

3. Method according to claim 1 or 2, wherein a control instruction is transmitted via the signaling element to the application management module (10) associated with the other communication terminal (6), said control instruction triggering the output of a passing-on notification.

4. Telecommunications system (1) having at least one communication terminal (4, 6) and an application management module (8, 10) associated with the communication terminal (4, 6), via which, when establishing a communication connection, the connection modalities with a superset communication management module (2), relevant for the communication terminal (4, 6), can be declared according to claim 1.

## Revendications

1. Procédé d'établissement d'une liaison de communication entre un terminal de communication émetteur (4) et un autre terminal de communication (6), dans lequel l'établissement de la liaison est initialisé par l'échange d'un message de lancement et un nombre de messages de confirmation entre le terminal de communication émetteur (4), l'autre terminal de communication (6) et un module supérieur de gestion de communication (2), les modalités de liaison relevantes pour le terminal de communication émetteur (4) étant déclarées dans une première séquence d'initialisation de liaison entre le module supérieur de gestion de communication (2) et un module de gestion d'application (8) assigné au terminal de communication émetteur (4), et une deuxième séquence d'initialisation de liaison étant prévue pour déclarer les modalités de liaison entre le module supérieur de gestion de communication (2) et un module de gestion d'application (10) assigné à l'autre terminal de communication émetteur (6), relevantes pour l'autre terminal de communication (6),
**caractérisé en ce que,**
à un message de confirmation sorti par le module de gestion d'application (8) assigné au terminal de communication émetteur (4), au module supérieur de gestion de communication (2), dans le cadre de la première séquence d'initialisation de liaison, un élément de signalisation avec une information de commande pour la seconde séquence d'initialisation de liaison est ajouté.

2. Procédé selon la revendication 1, dans lequel la déclaration des modalités de liaison entre le module supérieur de gestion de communication (2) et un module de gestion d'application (10) assigné à l'autre terminal de communication (6), relevantes pour l'autre terminal de communication (6), est supprimée par l'élément de signalisation.

3. Procédé selon la revendication 1 ou 2, dans lequel une instruction de commande est transmise par l'élément de signalisation au module de gestion d'application (10) assigné à l'autre terminal de communication (6), dite instruction de commande déclenchant la sortie d'une notification de réacheminement.

4. Installation de télécommunication (1) ayant au moins un terminal de communication (4, 6) et ayant un module de gestion d'application (8, 10) assigné au terminal de communication (4, 6), par lequel, lorsqu'une liaison de communication est établie, les modalités de liaison avec un module supérieur de gestion de communication (2), relevantes pour le terminal de communication (4, 6), peuvent être déclarées selon la revendication 1.
